# EUROPEAN PATENT APPLICATION

(11) **EP 4 670 975 A1**
(43) Date of publication of application: **31.12.2025**
(21) Application number: 24184604.7
(22) Date of filing: 26.06.2024
(51) Int. Cl.: B33Y 80/00, F28D 15/04, F28D 21/00

(54) **COOLING STRUCTURE**

(71) Applicant: Madrid Space Europe, S.L., 28919 Leganés (ES)
(72) Inventor: COBO LÓPEZ, Borja, 28919 leganés (ES); ORGAZ DÍAZ, David, 28919 Leganés (ES)
(74) Representative: Isern Patentes y Marcas S.L.

(57) **Abstract**

The present invention comprises: frame (8); and sealed heat transfer tubes (1) fixed to the frame (8), and with: external walls (4), in a longitudinal direction; wick (5) surrounded by the external walls (4), which defines a gap (13) in the heat transfer tube (1); and in liquid (2) and vapour (3) phase, which circulates in the gap (13), between an evaporation section (6), and a condensation section (7); the gap (13) being configured to conduct the vapour heat transfer fluid (3), from the evaporation section (6) to the condensation section (7), and the wick (5) comprising longitudinal channels (10, 11, 12) and pores, to conduct the condensed heat transfer fluid (3) by capillarity, between the condensation section (7) and the evaporation section (6). It improves heat dissipation efficiency.

## Description

### Technical field of the invention

The present invention can be included within the field of additive manufacturing, as well as also falling within the sector of heat transfer tube technology, also called "heat transfer ducts", and even "heat pipes", and which are defined as passive phase change thermal components, and the purpose of which is to minimise the thermal gradient between two regions separated by a certain distance. More specifically, the purpose of the present invention is a high thermal transfer structure intended for thermal control (for example, cooling) of, in general, components and systems, for example, electronic devices.

### Background of the invention (state of the art)

To achieve the reduced thermal gradient just mentioned, which is required to efficiently cool a component or system, such as an electronic device, the aforementioned heat transfer tubes are used, which are sealed tubes containing a fluid, and that allow heat to be transported in a very effective manner, i.e., minimising the thermal gradient between one end and the other. The operating principle is based on the phase change of the working fluid contained within the heat transfer tube: the fluid in liquid state evaporates at the hot end, called "evaporator", of the heat transfer tube (where the heat originated by an external component or system, such as a device, is introduced), and flows spontaneously to the other end, where it condenses, and returns to the side of the evaporator through a so-called wick (which in many cases is an internal wall to the pipe, porous or with channels, which provides capillary thrust so that the fluid returns in the spontaneous manner previously mentioned). In this way, a continuous flow of fluid is achieved that allows heat to be extracted from the hot side and taken to the cold side, where the component or system to be cooled adheres to the external portion of the hot side of the heat transfer tube, and the border to which heat is to be dumped adheres to the external portion of the cold side.

In view of the above, it is determined that the heat transfer tubes have high effective conductivity, due to the phase change (from liquid to vapour and vice versa) of the fluid they contain. In the area of the heat transfer tube called "evaporator", a dissipated power is transferred, coming from the component or system to be cooled, to the heat transfer fluid contained in the heat transfer tube, and which is in a state of saturation (liquid and gas coexisting), where the liquid begins to evaporate and expand inside the heat transfer tube, and the vapour reaches an area of the heat transfer tube called "condenser", where it changes phase again to liquid, allowing the dissipated power to be evacuated in the form of heat. For its part, the liquid returns to the evaporator through the wick due to capillary pressure (capillarity). This process is repeated as long as there is sufficient capillary pressure.

Moreover, in parallel with this technology, the electronics on board space vehicles continue to evolve, with electronic devices that manage increasingly higher power, in increasingly smaller volumes and, therefore, higher operating temperatures. Therefore, the demand for the application of heat transfer tubes in structures containing electronics is increased.

### Description of the invention

The present invention discloses a cooling structure for components or systems, such as for electronic devices, according to independent claim 1. Other optional advantageous features are explained in the dependent claims and in the detailed description of a preferred exemplary embodiment.

In this way, a heat transfer structure is disclosed, which is produced by additive manufacturing in metals, such as SLM (laser sintering), which comprises at least one heat transfer tube (heat pipe) embedded with 2 phases, liquid and vapour, and with an interior wick equipped with an internal structure that combines geometric characteristics of channels, porosity and roughness configured for optimal conduction of the heat transfer fluid.

The invention is based on a combination of technologies, applying to the production of heat transfer tubes additive manufacturing, a pioneering technology, known as 3D printing, which has generated a great impact in industries such as aerospace and automobiles, as well as in different fields that traditional manufacturing is not able to reach.

More specifically, the present invention presents heat transfer tubes made by means of additive manufacturing, instead of traditional methods, such as extrusion of tubes to which a porous wick is subsequently inserted. In this way, the current heat transfer invention is integrated into a supporting structure that generates the final system, instead of being a heat transfer element attached to said structure. The heat transfer tubes are, therefore, due to the manufacturing process, embedded within the structure itself, which reduces the heating of said structure compared to another structure without the embedded heat transfer tubes, since the additive manufacturing technology allows the heat transfer tube to be located in locations where it would not be possible using conventional manufacturing.

The combination of these technologies allows the creation of passive heat transfer elements, i.e., heat transfer tubes, which are embedded in structures with high thermal and structural requirements, and with direct application in the aerospace, aeronautics and automotive industries.

The additional incorporation, in the wick, of longitudinal channels and pores, improves the applicability of additive manufacturing to the production of heat transfer tubes.

The present invention constitutes a thermo-mechanical solution in which the structure carrying the electronics has embedded heat transfer tubes distributed throughout its geometry, allowing the following advantages:
- Reduction of mounting, assembly, verification times.
- Weight reduction.
- Cost reduction.
- Thermal improvement, by removing excess interfaces between different materials.
- Material with validated structural behaviour in structures qualified for space with high structural requirements.

### Brief description of the figures

The advantages mentioned above, as well as other advantages and features of the present invention, will be better understood with reference to the following detailed description of preferred embodiments with reference to the attached figures, which are to be considered by way of illustration, not limitation, and wherein:
Figure 1 shows a schematic perspective view of the cooling structure of the present invention.
Figure 2 shows a detailed perspective view of two examples of heat transfer tubes with wicks of different thicknesses.
Figure 3 shows a diagram of the energy transfer in the heat transfer tube.
Figures 4a-4c show enlarged cross-sectional views of different channel geometries in the wick, where figure 4a shows channels having rectangular configuration, as well as figure 4b shows channels having circular configuration, and figure 4c shows channels having triangular configuration.

### Detailed description of an exemplary embodiment of the invention

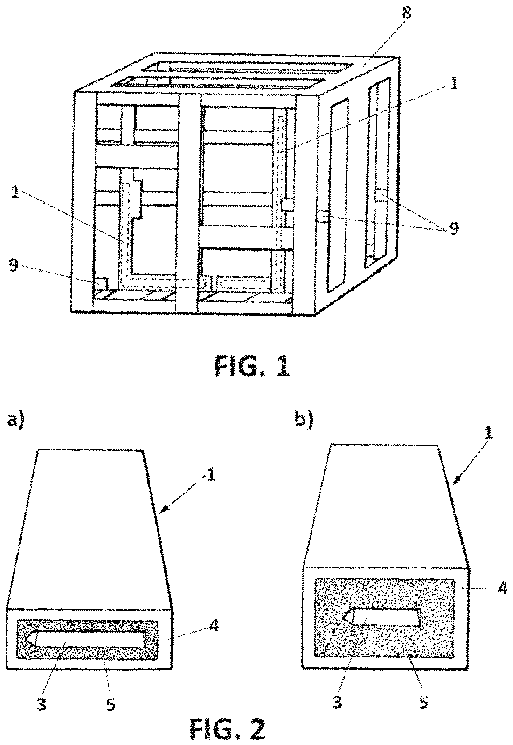

Below, with the help of the aforementioned attached figures 1-4, a detailed description is provided of an exemplary preferred embodiment of the cooling structure for, for example, electronic devices, according to the present invention.

As shown in the aforementioned figures 1-4, the cooling structure of the invention comprises at least one sealed two-phase heat transfer tube (1), filled with a heat transfer fluid in a saturated liquid (2) - vapour (3) state, and the heat transfer tube (1) being configured for heat dissipation. The heat transfer tube (1) in turn comprises external walls (4), which define a longitudinal direction, and a hollow interior wick (5), which defines a gap (13), surrounded by the wick (5), in the heat transfer tube (1) through which the vapour fluid (3) circulates in the longitudinal direction, in addition to being arranged between the external walls (4), and away from and surrounded by said external walls (4). The heat transfer fluid (2, 3) flows through the inside of the wick (5), bathing said wick (5). The heat transfer tube (1) includes an evaporation section (6), where the liquid heat transfer fluid (2) evaporates by means of heat input, and a condensation section (7), where the vapour heat transfer fluid (3) condenses by dissipating heat to a frame (8), to which the heat transfer tubes (1) are fixed, and which is explained below. The heat transfer fluid (2, 3) is preferably selected from alcohols, ammonia and a mixture thereof.

The wick (5) is surrounded by the external walls (4) and is intended to conduct the liquid heat transfer fluid (2) by capillarity, for which it combines, as explained below, specific design characteristics that allow for maximum capillary transport, considering the definition of the wick (5) in three different design scales: macro design, meso design and micro design.
- The macro design focusses on the suitability of the design of the wick (5) around the vapour fluid (3). Additive manufacturing makes it possible to generate complex geometries outside the scope of traditional manufacturing. The macro design of the wick (5) studies the viability of different topologies (grooved, porous, mesh or a combination of the above). Although there are certain limitations regarding this innovative process, 3D printing has demonstrated its versatility through the use of supports (9), for fixing to the frame (8), during the process and changes in the orientation of the heat transfer tube (1) during manufacturing.
- The meso design is focussed on the geometry present in the wick (5) of a heat transfer tube (1). This level of detail allows maximising a greater transport of heat transfer fluid (2, 3) and, consequently, better capillary behaviour. On the one hand, in the industry, several designs of heat transfer tubes (1) with grooved type wick (5) are known, which are characterised by having longitudinal channels open to the vapour fluid (3). These channels can have various shapes. Due to additive manufacturing, channels (10, 11, 12) can be generated with internal geometry that can be extended to other variants, such as rectangular (10), circular (11) or triangular (12), according to studies carried out by the inventor. On the other hand, the wicks (5) based on porous structures offer better capillary behaviour. However, this characteristic is balanced by permeability, i.e., the resistance exhibited by the medium to the advance of the liquid fluid (3), which can be up to two orders of magnitude lower compared to a grooved geometry (10, 11, 12). Therefore, at this design level, the creation of porous structures with variable porosity (between 27.5% and 42.4%) in two directions with effective pore radius values between 0.030 mm and 0.200 mm allows the generation of a medium with good capillary behaviour and considerable permeability.
- Finally, the micro design is intended to generate a wick (5) the internal and external surfaces of which have localised roughness. This characteristic significantly improves the transport of liquid fluid (3), not only through an open channel (with rough walls) but also on the surfaces adjacent thereto. The roughness values are shown below:

- Ra comprised between 19.2 µm and 97 µm;
- Sa comprised between 28.7 µm and 117 µm; and
- Wa comprised between 15.4 µm and 48.0 µm.

This roughness allows the obtaining of structures with interconnected porosity, thus combining the high permeability of an open channel together with the high capillarity of a porous medium.

As previously stated, the cooling structure also includes a chassis-frame (8), the geometry of which, limited only by the additive manufacturing technology itself, can vary, both in shape and dimensions, according to the final application, wherein the external walls (4) of the heat transfer tube (1) are made of a material selected from aluminium alloys, steel, titanium, as well as copper alloys. In addition, they may incorporate different mechanical attachment systems (not shown) for securing electronic devices (not shown) to which said technology must be applied for heat dissipation.

As is known, the heat transfer tube (1) of the structure of the invention operates under certain operational limits. These operational limits take into account factors such as: maximum velocity of the vapour fluid (3) in the gaseous state; ratio between viscous forces and surface tension forces; maximum permissible heating before degrading; and chosen design that allows better capillary transport. The latter represents the most important operational limit, since it depends on the working fluid and the design of the wick.

In accordance with the foregoing explanation, the cooling structure of the invention comprises a frame (8) in which one or several sealed heat transfer tubes (1) are supported, configured for heat dissipation, and comprising external walls (4), which surround and enclose a wick (5), as well as the heat transfer tubes (1) include, inside the wick (5), a heat transfer fluid (2, 3), the heat transfer tube (1) comprising an evaporation section (6) in which the liquid heat transfer fluid (2) evaporates by means of heat input, and a condensation section (7) in which the vapour heat transfer fluid (2) condenses, dissipating heat towards the frame (8), so that the interior surrounded by the wick (5) is configured to conduct the vapour heat transfer fluid (3) between the evaporation section (6) and the condensation section (7), and the wick (5) is configured to conduct the liquid heat transfer fluid (2) by capillarity between the condensation section (7) and the evaporation section (6).

The wick (5) comprises a plurality of channels (10, 11, 12) configured to conduct the liquid heat transfer fluid (3) by capillarity between the condensation section (7) and the evaporation section (6). The wick (5) also includes a plurality of pores configured to conduct the liquid heat transfer fluid (3) by capillarity between the condensation section (7) and the evaporation section (6).

Preferably, the external walls (4) are made of a material selected from aluminium alloys, steel, titanium, as well as copper alloys.

### Description of the experimental methodology

The implementation, and the most relevant results, of the experimentation carried out by the inventor regarding the configuration of the heat transfer tubes (1) of the present invention are described below. More specifically, the experiment aims to validate the characteristics of porosity, roughness and channel geometry in the wick.

### TEST PIECES WITH CHANNELS AND ROUGH SURFACE

Capillary experiments were carried out on samples of flat, additively manufactured test pieces, provided with grooves - hereinafter referred to as longitudinal "channels" (10, 11, 12) - having vertical configuration, along their surface. The experiment evaluates the imbibition process (liquid absorption) in the channels (10, 11, 12) when the test pieces are in contact with the free surface of a liquid at rest. The imbibition process in the samples serves as reference information for the capillarity phenomenon that takes place in the heat transfer tubes (1). Each sample has been manufactured with a different channel size (w) (in particular, width) (w = 0.25, 0.4, 0.5, 0.6 and 0.7 mm) and a different cross-sectional geometry (rectangular, circular and triangular). Taking into account the combined values of both parameters (channel size and geometry), a total of fifteen test pieces were tested. All samples were manufactured using the SLM (Sintering Laser Melting) method with an aluminium alloy for 3D printing. This technique allows a resolution on the order of tens of microns, which constitutes a length scale comparable to the dimensions of the channels (10, 11, 12).

The roughness in the channels (10, 11, 12) of two rectangular test pieces (w = 0.25 and 0.40 mm) was measured through confocal microscopy equipment (LEICA DCM 3D) and according to the ISO 4287 standard for the parameters of profile roughness (R) and to the ISO 25178 standard for surface parameters (S). The values obtained are:
- Test piece with w = 0.25 mm: Ra = 80.7 µm; Sa = 97.5 µm and Wa = 40.0 µm.
- Test piece with w = 0.40 mm: Ra = 24.2 µm; Sa = 35.9 µm and Wa = 19.3 µm.

As a preliminary conclusion of the test pieces, it is observed that their roughness is notable and that they present a certain porosity.

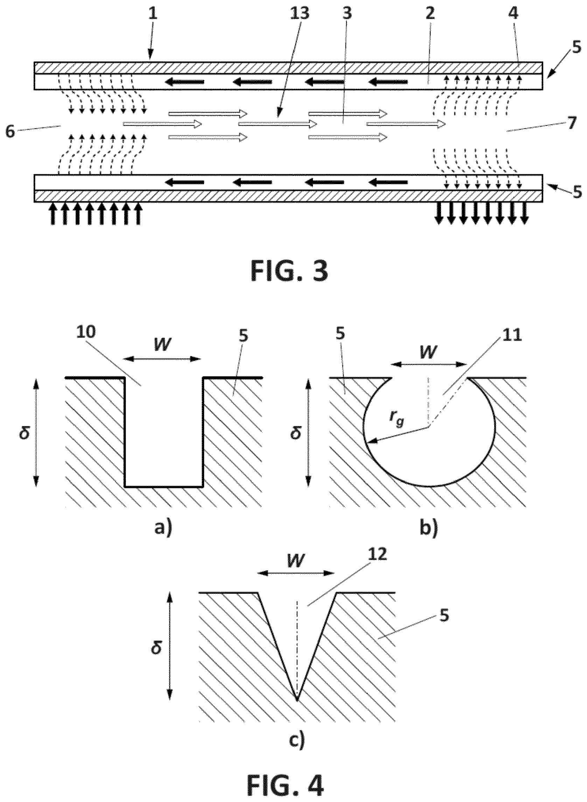

The working fluid (2, 3) used to carry out the experiments was acetone, since it shows adequate wettability and is chemically compatible with aluminium alloys. The different geometries used in the channels (10, 11, 12) have been defined according to figures 4a-4c, where image 4a shows a test piece with a rectangular geometry channel (10), while figure 4b shows a test piece with a channel having circular geometry (11), and figure 4c shows a test piece with a channel having triangular geometry (12).

In order to qualitatively evaluate the rise of the liquid fluid (2), two measurement techniques were used. On the one hand, the loss of mass of liquid fluid (2) present in a tank upon coming into contact with the test piece, measured through a scale (not shown) with a sampling frequency of 2.5 Hz. On the other hand, a thermal imaging camera (not shown) was used to measure a wet front of the liquid along the channels (10, 11, 12) and adjacent surfaces. The thermal imaging camera was equipped with two types of lenses: A telephoto lens to capture the progress of the fluid throughout the test piece with a channel having rectangular section (10), see figure 4a, and a micro-lens capable of obtaining images with better spatial resolution in the first moments of imbibition in the test piece with a circular-shaped channel (11), see figure 4b. As it is a thermographic image, and in order to discern between a dry and wet region in the test piece, a post-processing algorithm was developed to measure the height of liquid fluid (2) imbibed as a function of time.

For all the test pieces, equipped with four intermediate channels (10, 11, 12) separated in width by rough stripes 7 mm long, both the point corresponding to the final height reached by the liquid fluid (2) within each channel (10, 11, 12), as well as the final average height in each section of rough intermediate surface were represented, where it can be observed that the height reached in the channel (10, 11, 12) was only slightly higher than the average in the rough area, outside the channel (10, 11, 12).

The temporal evolution of the height of the liquid fluid (2) through the imbibition process was also recorded for different test pieces, with channels (10, 11, 12) having rectangular (10), circular (11) and triangular (12) geometry and where, in each case, the evolution in the channel (10, 11, 12) compared to the evolution in the intermediate rough area was observed.

To translate the experimental results into fluid transport parameters related to the design of heat transfer tubes (1), such as: K, permeability; C, curvature; r_{eff}, effective pore radius; ε, porosity; etc.; a dimensionless mathematical model has been developed to estimate said transport parameters, supplied with average height values in the channels (10, 11, 12) and in the intermediate surfaces, in channels having rectangular (10), circular (11) and triangular (12) geometry, for different values of channel width (w).

This method has been carried out with the fifteen test pieces, obtaining values of permeability and curvature for all of them, which are required to characterise the design of a wick (5) with channels in heat transfer tubes (1).

The results obtained show similar permeability values for the channels (10, 11, 12), at least in order of magnitude, compared to those obtained in the intermediate surfaces. In this way, it is concluded that the permeability or, in other words, the viscous friction that opposes the imbibition of the liquid fluid (2), is controlled by the flow within the porous surface.

Regarding curvature, the results obtained show a dominant character depending on the internal geometry of the channels (10, 11, 12). Representing the curvature of the channels (10, 11, 12) against that of the intermediate surfaces, and taking into account the different shapes of the channels (10, 11, 12), for all the sizes (w) considered, it can be seen that the curvature on the intermediate surfaces follows a trend similar to that seen in the channels (10, 11, 12).

From the above, it follows that the capillary pressure gradient that directs the liquid fluid (2) is governed by the geometric characteristics of the channels (10, 11, 12). This point is confirmed, since the liquid fluid (2) rises on the surfaces almost to the same extent as in the channels (10, 11, 12).

Finally, a comparison has been made between the curvature of channels (10, 11, 12) with flat and smooth surfaces and the curvature of channels (10, 11, 12) with rough surfaces (affected by a correction factor, r). In this way, the ratio between the two qualitatively explains the fact that the curvature of the rough test pieces yields values consistently higher than the theoretical data (r > 1). The positive effect of this roughness on liquid fluid transport extends to when said characteristic is of the order of the channel size (10, 11, 12). Assuming that this roughness is not too great to obstruct the transport of the liquid fluid, and making an estimate with the available data, it can be approximated that, for a rectangular test piece with w = 0.5 mm, the ratio between curvatures is approximately 2.9. This calculation is proposed as a method to estimate the relative roughness.

### TEST PIECES WITH POROUS STRUCTURE

Similar to the method described for test pieces with channels, imbibition experiments were carried out to verify capillarity (fluid transport) in porous wicks. In this case, two porous wick test pieces with thicknesses of 1 and 3 mm were tested.

However, in the rough test pieces, a 1 mm thick layer of solid material is observed, so only the relative mass loss can be measured in a liquid reservoir at rest (since the thermal imaging camera cannot access the fluid front behind said layer). For this reason, the mathematical model previously described undergoes a small modification to be able to be based on mass data and not height data.

### List of references

- 1: Heat transfer tube
- 2: Liquid heat transfer fluid
- 3: Vapour heat transfer fluid
- 4: External walls
- 5: Wick
- 6: Evaporation section
- 7: Condensation section
- 8: Frame
- 9: Supports
- 10: Rectangular channel
- 11: Circular channel
- 12: Triangular channel
- 13: Gap

## Claims

1. A cooling structure, **characterised in that** it comprises:
- a frame (8); and
- at least one sealed heat transfer tube (1), fixed to the frame (8), and configured for heat dissipation, in turn comprising:
- external walls (4), which define a longitudinal direction;
- a wick (5) housed and surrounded by the external walls (4), which is hollow and defines a gap (13) in the heat transfer tube (1) surrounded by the wick (5); and
- a heat transfer fluid (2, 3) in two phases, liquid (2) and vapour (3);
the heat transfer tube (1) being configured so that the gap (13) of the heat transfer tube (1) is configured to conduct the vapour heat transfer fluid (3) in a longitudinal direction, from an evaporation section (6) of the heat transfer tube (2), in which the liquid heat transfer fluid (2) evaporates by means of heat input, to a condensation section (7), also of the heat transfer tube (1), in which the heat transfer fluid (1) condenses, dissipating heat out of the cooling structure, and the wick (5) is configured to conduct the liquid heat transfer fluid (2) by capillarity in a longitudinal direction from the condensation section (7) to the evaporation section (6); the wick (5) comprising longitudinal channels (10, 11, 12) and pores, the channels and pores configured to conduct the condensed heat transfer fluid (3) by capillarity, between the condensation section (7) and the evaporation section (6).

2. The cooling structure according to claim 1, wherein the pores are part of a porous structure of the wick (5), with variable porosity, between 27.5% - 42.4%, in two directions, and with effective pore radius values comprised between 0.030 mm and 0.200 mm.

3. The cooling structure according to any of claims 1-2, wherein the wick (5) has a roughness defined by:
- Ra comprised between 19.2 µm and 97 µm;
- Sa comprised between 28.7 µm and 117 µm; and
- Wa comprised between 15.4 µm and 48.0 µm.

4. The cooling structure, according to any of claims 1-3, wherein the external walls (4) are made of a material selected from aluminium alloys, steel, titanium, as well as copper alloys.

5. The cooling structure, according to any of claims 1-4, wherein the heat transfer fluid (2, 3) is selected from alcohols, ammonia and a combination thereof.
